# EUROPEAN PATENT APPLICATION

(11) **EP 4 727 107 A1**
(43) Date of publication of application: **15.04.2026**
(21) Application number: 24205492.2
(22) Date of filing: 09.10.2024
(51) Int. Cl.: H04M 3/51, H04M 3/56

(54) **A METHOD FOR PROVIDING A REMOTE SUPPORT FOR A USER OF A MOTOR VEHICLE BY A SUPPORT SYSTEM, A CORRESPONDING COMPUTER PROGRAM PRODUCT, A CORRESPONDING COMPUTER-READABLE STORAGE MEDIUM, AS WELL AS A CORRESPONDING SUPPORT SYSTEM**

(71) Applicant: Valeo Comfort and Driving Assistance, 94000 Créteil (FR)
(72) Inventor: Marcasuzaa, Herve, 94000 Creteil (FR); Nguyen, Kevin, 94000 Creteil (FR); Bunouf, Elise, 94000 Creteil (FR); Fez, Nicolas, 94000 Creteil (FR); Yovo, Melvin, 94000 Creteil (FR); Rhodes, Brice, 94000 Creteil (FR); Ben-Mabrouk, Salem, 94000 Creteil (FR)
(74) Representative: Jauregui Urbahn, Kristian

(57) **Abstract**

The present invention relates to a method for providing a remote support for a user (2) of a motor vehicle (3) by a support system (1), comprising: receiving a support request (5) from the motor vehicle (3) by a receiving device (4) of the support system (1); generating a digital conference room (8) for at least a communication between the motor vehicle (3) and a support person (9) from the support system (1) depending on the received support request (5) by an electronic computing device (6) of the support system (1); establishing a communication link between the motor vehicle (3) and the digital conference room (8) by a communication device (7) of the support system (1); establishing a communication link between the support person (9) and the digital conference room (8) by a communication device (7) of the support system (1); and providing at least one further communication link for the digital conference room (8) for at least one further support person (11, 12, 13) for joining the digital conference room (8) by the electronic computing device (6). Furthermore, the present invention relates to a computer program product, a computer-readable storage medium, as well as to a support system (1).

## Description

The present invention relates to a method for providing a remote support for a user of a motor vehicle by a support system. Furthermore, the present invention relates to a corresponding computer program product, a corresponding computer-readable storage medium, as well as to a corresponding support system.

In existing systems, road assistance operators have a one-to-one interaction via for example a phone call with a user, for example a vehicle occupant as a driver or passenger, requesting breakdown or emergency help, for example the so-called B-call and E-call. These systems are highly reliable and fast as they are operated as one-to-one links over telecommunication networks.

However, they are limited because many calls are inadvertently triggered, for example a user error or kids' errors, or false triggered, for example calling emergency for a mere orange warning in the car instruments cluster. Furthermore, a user may not be able, in particular in the know or in the capacity, to provide relevant and precise information about the defect or accident. No other party, for example the witness of the event or a tow truck, may join the conversation when relevant. Furthermore, only audio speech and limited data, for example latest Global Positioning System (GPS) location and an airbag status, are exchanged, not letting the assistance operator fully comprehend the situation, for example with help of images, extensive vehicle data or furthermore. There is a lack in continuity and the processing of a case, resulting in the use of to be bounced between multiple contacts and having to, for example, reexplain the situation every time.

US 11 74 12 98 B1 discloses methods and systems for real-time meeting notes within a communication session. In one embodiment, the system connects to a communication session with a plurality of participants; receives, in real-time during the communication session, updates to a transcript of a conversation between the participants produced during the communication session, the transcript including time stamps for a plurality of utterances associated with speaking participants; receives a request from one of the participants to generate a meeting note which includes a subset of utterances from this transcript; determines a starting time stamp and ending time stamp for utterances representing the boundaries of the meeting note; generates, in real-time during the communication session, a meeting note where the utterances for the starting time stamp and ending time stamp are the starting utterance and ending utterance of the meeting note, respectively; and presents to at least the participant, within a user interface, the generate meeting note.

US 1 00 75 676 B2 discloses an intelligent virtual assistant for respectively customizable interactive audio/video content to each of a plurality of computing devices during a network communication session. Input is received from at least one device, and is determined via information provided in or with the input, that the input is at least one of speech input, facial input, gesture input and textural input. The input is processed and machine-based learning occurs using at least some of the processed input. The intelligent virtual assistant is provided for the respectively customizable interactive audio/video content as a function of the machine-based learning process via at least one of the plurality of computing devices.

It is an object of the present invention to provide a method, a corresponding computer program product, a corresponding computer-readable storage medium, as well as a corresponding support system, by which a more improved remote support for a user of a motor vehicle is provided.

This object is solved by a method, a corresponding computer program product, a corresponding computer-readable storage medium, as well as a corresponding support system according to the independent claims. Advantageous embodiments are presented in the dependent claims.

One aspect of the invention relates to a method for providing a remote support for a user of a motor vehicle by a support system. A support request from the motor vehicle is received by a receiving device of the support system. A digital conference room, or Smart Space or Smart Digital Space (hereinafter "digital conference room"), for at least the communication between the motor vehicle and a support person from the support system is generated depending on the received support request by an electronic computing device of the support system. A communication link is established between the motor vehicle and the digital conference room by communication device of the support system. A communication link is established between the support person and the digital conference room by communication device of the support system. At least one further communication link for the digital conference room for at least one further support person for joining the digital conference room is provided by the electronic computing device. A digital conference room, or Smart Space or Smart Digital Space (hereinafter "digital conference room"), can be a detached and oriented space for resolution of a case.

Therefore, a so-called smart space can be provided which provides a so-called common video call, data sharing, messaging, storage and furthermore capabilities for multiple attendees. The smart space may be the digital conference room. In addition, the smart space hosts smart "in-space" agents that join in assistance sessions with elevated management and processing rights. A smart "in-space" agent assigned to a specific assistant session, handles it from start to resolution. The assistant session actually persists at least until the full resolution. During that period, the smart "in-space" agent manages resources, attendees and necessary actions. For example, asking a first responder or car dealer (professional) to join in, and keeping trying as long as necessary.

Furthermore, computing the information expected by the case management tools is provided. Furthermore, interacting directly with the smart "in-vehicle" agent, for example via an API, and the vehicle occupants, for example via messaging or voice dialogue can be provided which are also present in the smart space. Analyzing the incoming data for further outcomes is provided, for example computer vision analysis of the video streams to understand the context of the assistance request. Each attendee may be granted access to data and streams relevant to his/her role, for example health data of occupants only for a medical professional attendee.

Therefore, instead of making a phone call, the smart "in-vehicle" agent suggests requesting assistance. The support system confirms on for example the popup display by the on-board application, the support system automatically joins a just-created smart assistance space, for example comparable to a meeting room, where an operator quickly joins him and they can start discussing the situation over chat/audio/video. To assess what can be done, the operator asks the smart "in-space" agent for a mechanic to join in and visualize with them the data of the vehicle and instructs the support system some actions to try out. As this happens, the smart "in-space" agent keeps monitoring what's going on in the smart assistance space, displays the right data and camera to support the conversation, and fills up the case reporting tool as information is discussed and collected. In the end, the operator/support person may just have to do a quick review of it in order to validate the case and send the mechanics on side.

The smart "in-space" agent is in particular AI agent (Artificial Intelligence Agent), which is a software designed to perform autonomous actions to achieve a specific goal within an environment. The agent perceives information from its environment through sensors, processes the information using artificial intelligence techniques, and then acts on the environment through actuators to accomplish the desired objectives. AI agents can learn from their experiences, adapt to changing environments, and make decisions based on probabilities and patterns, making them increasingly effective at accomplishing tasks over time.

The so-called remote support for motor vehicles refers to the ability to diagnose an assist with vehicle issues remotely, from a distance. This can be done through various means, in particular as over-the-air software updates, wireless data transmission, or using a remote connection to access the vehicles" onboard system or to support live the user of the motor vehicle. With the remote support additionally, mechanics and technicians can troubleshoot problems, run diagnostics and even perform certain repairs without physically being present with the vehicle. This can save time and money for both the vehicle owner and the service provider. Additionally, it allows for real-time monitoring of vehicle performance and potential issues, which can help prevent breakdowns and increase overall vehicle safety.

An E-call and B-call are two types of emergency call systems that can be installed in motor vehicles. E-call is a European Union initiative that requires all new cars sold in the EU to have an automatic emergency call system installed. The system uses sensor and communication models to detect serious accidents, such as several collisions or rollovers, and automatically dials the European emergency service number to alert emergency responders. It also transmits important data about the vehicle, such as its location, time of accident, number of passengers, and the direction of travel. The E call system is designed to provide quick and efficient assistance in the event of a serious accident, reducing response time and potentially saving lives. The E-call function can be used for generating the support request and for joining the digital conference room. For example, but not limited to, at least one smart "in-space" agent can analyze and/or explain how the motor vehicle and/or vehicle user ended up where located in order to facilitate a quick localization and/or quick access to a support person, such as a first responder and/or emergency responder. Furthermore, for example, but not limited to, the vehicle user can share the motor vehicle route with a support person, so the support person can end up at the correct location of the motor vehicle accident; this avoids an inaccurate GPS location reading, where a support person, such as a first responder and/or emergency responder, can end up on the other side of a fence and/or gate and/or building.

B-call, on the other hand, is a manual emergency call system that can be activated by the driver or passengers in case of an emergency. It works similar to the E-call, but requires manual activation rather than automatic detection. The B-call system can be used to alert emergency services in situations where immediate assistance is needed, such as a medical emergency, breakdown or theft. Both, E-call and B-call systems, provide an added layer of safety and security for vehicle occupants, allowing them to quickly and easily summon help in the event of an emergency. The manual activation of the B-call can also be used to generate the request and for joining the digital conference room.

According to an embodiment, depending on the type of received support request, the further support person is selected and invited to the digital conference room. For example, if an emergency request as a type is received, a first responder can be invited to the conference room. If a breakdown, in particular a technical issue, is received, a technical person can be invited to the conference room. The invitation is generated automatically. Therefore, the correct further support person can be invited and a solution for the problem can be provided in an improved manner.

In another embodiment, at least an audio conference and/or a video conference and/or a chat conference as a digital conference room is provided. For example, on the side of the motor vehicle, an AI agent can be provided. The AI agent may be configured for providing an audio conference and/or video conference and/or chat conference. The person may communicate via the AI agent with the support system by using the digital conference room. Therefore, different types of conferences can be provided.

In another embodiment, a data request for receiving data from the motor vehicle is transmitted to the motor vehicle. Therefore, the support system can transmit the data request in order to receive different data from the motor vehicle. The conference room can then be supplemented with the received data. Therefore, the support person as well as the further support person may receive different data from the motor vehicle in order to get an overview about the issue of the motor vehicle.

In another embodiment, depending on a type of the received support request the data request for receiving data from the motor vehicle is generated. For example, if no emergency call is received, no health data of the person inside of the motor vehicle are requested. If, for example, a breakdown is the type of the received support request, just technical data from the motor vehicle are received. Therefore, different data from the motor vehicle depending on the type of the received support request can be provided.

In another embodiment, current sensor data from the motor vehicle are requested. For example, camera data or temperature data or data from a battery status can be requested and received. This has the advantage, that also the support person can receive sensor data from the motor vehicle and therefore can get a current overview of the status of the motor vehicle and, for example, from surroundings of the motor vehicle and further vehicle-specific and/or vehicle-relevant data. Moreover, the current sensor data can be live data of the motor vehicle and/or past stored data of the motor vehicle. For example, the past stored data of the motor vehicle can be an offline recorder, such as a 'blackbox', in order to reconstitute the scenario of the moments leading to a motor vehicle event, such as a crash and/or failure.

In another embodiment, a current video stream from the inside of the motor vehicle and/or a current video stream from the outside of the motor vehicle is requested. Therefore, the support system may get information about the status of the person/persons inside of the motor vehicle. Furthermore, the status outside of the motor vehicle, for example an accident status with other vehicles or persons or a current position of the motor vehicle depending on characterizing landmarks can be received by using the current video stream from the outside of the motor vehicle. Therefore, the support person may get an overview about the status of the motor vehicle.

According to another embodiment depending on a specialization of the further support person, an access to the received data is restricted. For example, if the further support person is a technical person, the further support person may get no access about health information from the person. Furthermore, if the further support person may be a first responder person, the first responder person may get no access about technical data from the motor vehicle. Therefore, data privacy is provided.

According to another embodiment, the received data can be displayed at least in part inside of the digital conference room. For example, the conference room may provide different optical tiles for visualization of the requested data. Therefore, the participants of the conference room may get an easy overview about the current status of the motor vehicle.

In another embodiment, depending on a type of the received support request an emergency support is requested. In particular, if an emergency request is received, an emergency support is automatically requested. For example, the support system then may transmit the position as well as the health status of the persons inside of the motor vehicle to the emergency support.

In another embodiment, a control signal for controlling at least one output device of the motor vehicle is transmitted to the motor vehicle. For example, as the output device, speakers of the motor vehicle may be used. If the persons are outside of the motor vehicle, the support person or the further support person may give instructions to the persons outside of the motor vehicle. Therefore, also when the persons are outside of the motor vehicle, instructions can be provided by the support system.

According to another embodiment, as the output device a speaker device and/or a light device is controlled. For example, the support system may control the light device when an emergency vehicle is approximating to the motor vehicle. Therefore, the support person may generate a light signal, in order to draw attention to the motor vehicle. Therefore, the emergency persons find the motor vehicle in an improved manner.

In another embodiment, a control signal for controlling at least one input device of the motor vehicle is transmitted to the motor vehicle. For example, as the input device, a vehicle camera and/or microphone can be used as remote support to switch viewpoints. If the persons are inside of the motor vehicle, the support person or the further support person may receive a viewpoint from the vehicle camera and/or microphone of the persons inside of the motor vehicle. Therefore, the support person or the further support person may give instructions to the persons inside of the motor vehicle according to the camera and/or microphone viewpoint.

In particular, the present invention is a computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

Furthermore, the present invention relates to a support system for providing a remote support for a user of a motor vehicle, comprising at least one receiving device, one electronic computing device, and one communication device, wherein the support system is configured for performing a method according to the preceding aspect. In particular, the method is performed by the support system.

Advantageous embodiments of the method are to be regarded as advantageous embodiments of the computer program product, the computer-readable storage medium, as well as the support system. Therefore, the support system comprises means for performing the method.

In the present disclosure, a computing unit/electronic computing device can for example be understood as a data processing device with processing circuits. Thus, a computing unit can perform computing operations to process data. The computing operations can also include indexed accesses to a data structure, for example a look-up table, LUT.

In particular, a computing unit can include one or more computers, one or more microcontrollers and/or one or more integrated circuits, for example one or more application-specific integrated circuits, ASIC, one or more field-programmable gate arrays, FPGA, and/or one or more systems on a chip, SoC. The computing unit can also include one or more processors, for example one or more microprocessors, one or more central processing units, CPU, one or more graphics processing units, GPU, and/or one or more signal processors, in particular one or more digital signal processors, DSP. The computing unit can also include a physical or virtual cluster of computers or others of the mentioned units.

A computing unit can also include one or more hardware and/or software interfaces and/or one or more storage units. Therein, a storage unit can be designed as a volatile data memory, for example as a dynamic random access memory, DRAM, or static random access memory, SRAM, or as a non-volatile data memory, for example as a read-only memory, ROM, as a programmable read-only memory, PROM, as an erasable programmable read-only memory, EPROM, as an electrically erasable programmable read-only memory, EEPROM, as a flash memory or flash EEPROM, as a ferroelectric random access memory, FRAM, as a magnetoresistive random access memory, MRAM, or as a phase-change random access memory, PCRAM.

For application cases or application situations, which can arise in a method according to the invention and which are not explicitly described herein, it can be provided that an error message and/or a request for inputting a user feedback are output and/or a default setting and/or a predetermined initial state are adjusted according to the method.

In another embodiment, but not limited to, the remote operator and/or smart "in-space" agent can control another participant's at least one source camera and/or at least one microphone and/or at least one speaker. For example, the remote operator and/or smart "in-space" agent can control another participant's vehicle camera and/or smartphone camera to obtain a proper viewpoint.

In another embodiment, but not limited to, at least one smart "in-space" agent can analyze all vehicle data and can automatically complete the assistance session in the smart assistance space. For example, at least one smart "in-space" agent can analyze at least one video stream, audio stream, Internet of Things (IoT) live data, vehicle 'blackbox' data, and/or any combination thereof, in order to automatically complete the assistance session in the smart assistance space. Moreover, for example, at least one smart "in-space" agent can triangulate calls in order to reject obvious false requests and/or prioritize important calls and/or pre-recommend at least one necessary procedure to solve the issue of the motor vehicle.

In another embodiment, but not limited to, at least one smart "in-space" agent can alter the vehicle audio and/or video stream to at least mute and/or hide sensitive information. For example, at least one smart "in-space" agent can mute and/or hide graphic content of the vehicle incident to one support person, while allowing access to another support person of the vehicle incident graphic content.

Further features of the invention are apparent from the claims, the figures and the description of figures. The features and feature combinations mentioned above in the description as well as the features and feature combinations mentioned below in the description of figures and/or shown in the figures can be encompassed by the invention not only in the respectively specified combination, but also in other combinations. In particular, implementations and feature combinations can also be encompassed by the invention, which do not comprise all of the features of an originally formulated claim. Moreover, implementations and feature combinations can be encompassed by the invention, which extend beyond or deviate from the feature combinations set forth in the relations of the claims.

There show:
- Fig. 1: a schematic block diagram according to the embodiment of a support system; and
- Fig. 2: another schematic block diagram according to the embodiment of a support system.

In the figures, the same elements are provided with the same reference signs.

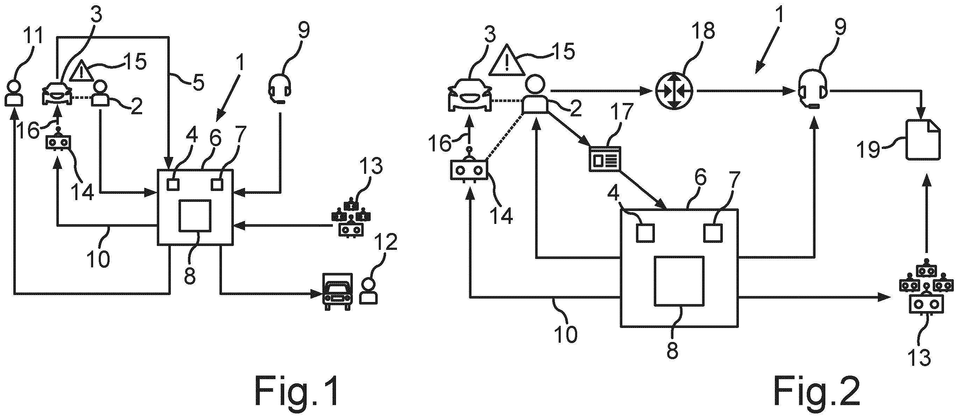

Fig. 1 shows a schematic block diagram according to an embodiment of a support system 1. The support system 1 is for providing a remote support for a user 2 of a motor vehicle 3. The support system 1 comprises at least one receiving device 4 for receiving a support request 5 by the motor vehicle 3. Furthermore, the support system 1 comprises at least one electronic computing device 6 and one communication device 7.

In particular, Fig. 1 shows that the support request 5 is received from the motor vehicle 3 by the receiving device 4. A digital conference room 8 for at least a communication between the motor vehicle 3 and a support person 9 from the support system 1 depending on the receiving support request 5 is generated. A communication link 10 between the motor vehicle 3 and the digital conference room 8 is established by the communication device 7. At least one further access for the digital conference room 8 for at least one further support person 11, 12, 13 for the digital conference room 8 is provided for joining the digital conference room 8 by the electronic computing device 6.

As shown in Fig. 1, for example the first support person may be a witness 11, a professional 12, or for example an assistance AI agent 13. The AI agent 13 can be at least one AI Agent and/or a group of AI Agents that exist inside and/or outside the digital conference room to execute tasks helping to the resolution.

Furthermore, Fig. 1 shows that an in-vehicle agent 14 is provided. The in-vehicle agent 14 may be configured for communicating with the user and/or with the motor vehicle 3, in particular in order to receive data from the motor vehicle 3. Furthermore, an event 15 is shown. For example, if the event 15, for example an accident, is detected, the support request 5 can automatically be generated.

In particular, depending on a type of the received support request 5 the further support person 11, 12, 13 is selected and invited to the conference room 8. Furthermore, at least an audio conference and/or a video conference and/or a chat conference as the digital conference room 8 is provided. For example, witness 11 can provide data and/or information of an incident related to user 2 and/or motor vehicle 3 for the digital conference room 8. For example, witness 11 can provide smartphone camera footage of a motor vehicle 3 accident involving user 2 for the digital conference room 8.

Furthermore, a data request 16 for receiving data from the motor vehicle 3 is transmitted to the motor vehicle 3. For example, depending on a type of the received support request 5 the data request 16 for receiving data from the motor vehicle 3 is generated. For example, current sensor data from the motor vehicle 3 are requested. Furthermore, a current video stream from the inside of the motor vehicle 3 and/or a current video stream from the outside of the motor vehicle 3 is requested. Furthermore, depending on a specialization of the further support person 11, 12, 13, an access to the received data is restricted. Furthermore, the received data can be displayed at least in part inside of the conference room 8. Moreover, the received data can be displayed and/or processed and/or analyzed and/or communicated at least in part inside of the conference room 8 and/or other software systems.

According to another embodiment, depending on a type of the received support request 5 an emergency support is requested. Furthermore, a control signal for controlling at least one output device of the motor vehicle 3 is transmitted to the motor vehicle 3. Therefore, for example, as the output device, a speaker device and/or a light device of the motor vehicle 3 is controlled.

Therefore, Fig. 1 shows a so-called redesign of a road assistance process around in particular two technical solutions. First, a cloud-hosted smart space, in particular like the most advanced chat/meeting rooms are provided. Furthermore, smart "in-vehicle" and "in-space" agents, in particular artificial intelligence agents, are provided. Thus, the digital conference room 8 can be a cloud-based solution and/or software solution and/or wireless solution and/or cloud-based software solution and/or wireless cloud-based software solution, and/or any combination thereof.

A smart "in-vehicle" agent embedded in the motor vehicle 3 captures events 15 related to assistance needs. These events are either defects raised by the vehicle subsystem, for example powertrain, batteries or furthermore, or requests made by the vehicle occupants, for example the driver and passengers, or emergencies triggered by safety systems, for example airbag trigger linked to E-call. The smart "in-vehicle" agent interacts with occupants and specialized services, for example computer vision of surroundings, or in-cabin occupants monitoring, in order to determine the true nature and criticality of the assistance needed, filtering out false events and collecting the relevant data to be shared. The smart "in-vehicle" agent creates in assistance request 5 that turns into an assistance session in any online smart space, automatically joining the local driver or passenger for the video call as necessary.

The smart space/digital conference room 8 provides a common video call, data sharing, messaging, storage, and capabilities for multiple attendees. In addition, the smart space hosts smart "in-space" agents, in particular shown with the reference sign 13, that may join in assistant sessions with elevated management and processing rights. A smart "in-space" agent, assigned to a specific assistance session, handles it from start to resolution. The assistance session actually persist at least until the full resolution. During that period, the smart "in-space" agent manages resources, attendees and necessary actions. For example, getting assistance operator or professionals of first respondence to join in, and keeping trying as long as necessary. Completing the information expected by the case management tools are also provided. Interacting directly with the smart "in-vehicle" agent, for example via an API, and the vehicle occupants is provided, which are also present in the smart space. Analyzing the incoming data for further outcome is also provided. Granting each attendee access to data and streams relevant to his/her role is also provided.

The smart "in-space" agent has the capability to request action remotely on the connected motor vehicle 3, as permitted by the vehicle security policy. As such, on its own, or on demand of one of the smart space session attendees and after checking authorizations, smart "in-space" agent queries the smart "in-vehicle" agent, for example lock/unlock doors, to switch video streaming sources, for example vehicle cameras in and out, and to turn on/off hazard lights. If not preauthorized, the smart "in-vehicle" agent may require extra authorization from occupants. If not preauthorized and an occupant is in no capacity, for example in a critical condition, the smart "in-vehicle" agent may bypass such authorization.

Fig. 2 shows another schematic block diagram according to an embodiment of a support system 1. According to Fig. 2 an application 17, as well as a call routine 18 is additionally provided. Furthermore, the assistance AI agents 13 may get different data files 19, in order to provide case management workflow. Therefore, Fig. 2 proposes also the "smart space" assistance concept that hosts all information and content in a single location with regard to a vehicle road incident, thus an incoming emergency call would result in the creation of a "smart space" that could host all relevant parties and information sources. Each participant in the "smart space" would have access/privileges to different data depending on their rights, for example, emergency services may have access to occupant health data, while call center assistance operator would not. Linked to these privileges/rights would be the electronic document management principals to control any documents and files for the case, for example transcription and recordings, so participants could access a copy depending on the needs. The objective is one convenient location for all content/information with user, assistance operator, all agents useful for the resolution of the case, for example witnesses 11, first responder or AI agents 13 may be in contact in the conference room 8. Furthermore, data from vehicle cameras, CTC TV cameras, audio/video analyzes, automatic case from filing out and furthermore are provided.

For an example, the user 2 has a vehicle engine failure on the roadway, so in-vehicle agent requests assistance via the on-board application 17. As agent does so, the user 2 joins automatically created the smart space with the operator/support person 9 to start discussing the issue over audio/video. To potentially resolve, the operator has mechanic join in the smart space to review the vehicle data together and instruct the user 2 of actions to try resolve issue. At this happens, an artificial intelligence may monitor current status of the smart space and fills out events into a report that the operator can just quick review before submitting a roadway on-side resolution.

Therefore, the agent in the motor vehicle 3 is proactive, and so starts the assistance request and to join the conference room 8. The invention allows participants to switch the camera of the other participant and allows to switch the microphone and speaker remotely, inside or outside of the motor vehicle 3. Furthermore, views and data access are different by the type of participants, for example, fire fighters can access uploaded health data, while tow truck cannot access health data. The invention allows motor vehicle 3 to stream one multiple cameras in mosaic from the same source, for example to stream front camera with rear camera merged together in a mosaic. The session does not share only audio, video, and screen, but also applicative data from the vehicle sensors, so the vehicle sensors automatically upload data to the smart space when a vehicle accident are detected internally. There is not one smart space per vehicle, smart space has a service life equivalent to the moment the file is opened until the moment it is closed.

## Claims

1. A method for providing a remote support for a user (2) of a motor vehicle (3) by a support system (1), comprising:
- receiving a support request (5) from the motor vehicle (3) by a receiving device (4) of the support system (1);
- generating a digital conference room (8) for at least a communication between the motor vehicle (3) and a support person (9) from the support system (1) depending on the received support request (5) by an electronic computing device (6) of the support system (1);
- establishing a communication link between the motor vehicle (3) and the digital conference room (8) by a communication device (7) of the support system (1);
- establishing a communication link between the support person (9) and the digital conference room (8) by a communication device (7) of the support system (1); and
- providing at least one further communication link for the digital conference room (8) for at least one further support person (11, 12, 13) for joining the digital conference room (8) by the electronic computing device (6).

2. The method according to claim 1,
**characterized in that**
depending on a type of the received support request (5) the further support person (11, 12, 13) is selected and invited to the conference room (8).

3. The method according to claim 1 or 2,
**characterized in that**
at least an audio conference and/or a video conference and/or a chat conference as the digital conference room (8) is provided.

4. The method according to any one of claims 1 to 3,
**characterized in that**
a data request for receiving data (16) from the motor vehicle (3) is transmitted to the motor vehicle (3).

5. The method according to claim 4,
**characterized in that**
depending on a type of the received support request (5), the data request for receiving data (16) from the motor vehicle (3) is generated.

6. The method according to claim 4 or 5,
**characterized in that**
current sensor data from the motor vehicle (3) are requested.

7. The method according to claim 6,
**characterized in that**
a current video stream from the inside of the motor vehicle (3) and/or a current video stream from the outside of the motor vehicle (3) is requested.

8. The method according to any one of claims 4 to 7,
**characterized in that**
depending on a specialization of the further support person (11, 12, 13), an access to the received data (16) is restricted.

9. The method according to any one of claims 4 to 8,
**characterized in that**
the received data (16) are displayed at least in part inside of the conference room (8).

10. The method according to any one of claims 1 to 9,
**characterized in that**
depending on a type of the received support request (5), an emergency support is requested.

11. The method according to any one of claims 1 to 10,
**characterized in that**
a control signal for controlling at least one output device and/or at least one input device of the motor vehicle (3) is transmitted to the motor vehicle (3).

12. The method according to claim 11,
**characterized in that**
as the output device, a speaker device and/or a light device is controlled, and/or as the input device, a camera and/or a microphone is controlled.

13. A computer program product comprising program code means for performing a method according to any one of claims 1 to 12.

14. A computer-readable storage medium comprising at least the computer program product according to claim 13.

15. A support system (1) providing a remote support for a user (2) of a motor vehicle (3), comprising at least one receiving device (4), one electronic computing device (6), and one communication device (7), wherein the support system (1) is configured for performing a method according to any one of claims 1 to 12.
